# EUROPÄISCHE PATENTSCHRIFT

(11) **EP 3 112 561 B1**
(45) Veröffentlichungstag und Bekanntmachung des Hinweises auf die Patenterteilung: **02.05.2018**
(21) Anmeldenummer: 16174486.7
(22) Anmeldetag: 15.06.2016
(51) Int. Cl.: E04H 17/16, F16B 7/04, F16B 2/22

(54) **KUNSTSTOFFSTREIFEN SOWIE ZAUN AUS DRAHTARTIGEN ELEMENTEN**
PLASTIC STRIPS AND FENCE MADE OF WIRE-SHAPED ELEMENTS
BANDES DE MATIERE PLASTIQUE ET CLOTURE COMPORTANT DES ELEMENTS FILAMENTEUX

(30) Priorität: 03.07.2015 EP 15175208
(43) Veröffentlichungstag der Anmeldung: 04.01.2017
(73) Patentinhaber: EXTE GmbH, 51688 Wipperfürth (DE)
(72) Erfinder: Friedl, Dan, 51688 Wipperfürth (DE)
(74) Vertreter: Müller, Enno

(56) Entgegenhaltungen:
- WO-A2-2010/121789
- FR-A1- 2 785 635
- FR-A1- 2 884 543
- US-A- 3 617 076

## Beschreibung

### Gebiet der Technik

Die Erfindung betrifft zunächst einen langgestreckten, im Wesentlichen mit einer sich in einer Vertikalprojektion abbildenden rechteckigen Grundfläche ausgebildeten Kunststoffstreifen gemäß Anspruch 1.

Weiter betrifft die Erfindung einen unter Ausbildung von Maschen gebildeten Zaun aus drahtartigen Elementen, wobei die drahtartigen Elemente bezogen auf einen aufgebauten Zustand des Zauns im Wesentlichen horizontal und im Wesentlichen vertikal verlaufend angeordnet sind und die im Wesentlichen vertikal oder im Wesentlichen horizontal verlaufenden Elemente in einem Querschnitt über einen Teil ihrer Erstreckung gekrümmt verlaufen.

### Stand der Technik

Kunststoffstreifen der in Rede stehenden Art sind bekannt. Diese können bspw. zu Sichtschutz- und/oder Werbezwecken an einem insbesondere aus drahtartigen Elementen gebildeten Zaun anordbar sein. In diesem Zusammenhang ist es bekannt, einen solchen Kunststoffstreifen insbesondere in Längsrichtung des Zaunes betrachtet durch die Maschen zwischen im Wesentlichen vertikal ausgerichteten Zaunelementen flechtartig hindurchzuziehen, so dass sich der Kunststoffstreifen in Längsrichtung des Zaunes abwechselnd vor und hinter den Zaunelementen erstreckt. Auch sind derartige Zäune bekannt, bspw. in Form sogenannter Stabmattenzäune.
Aus der WO 2010/121789 A2 ist ein Befestigungsmittel für ein Drahtzaunelement an einem Pfosten bekannt, das als im Wesentlichen quadratisches Kunststoff-Plattenteil ausgebildet ist. An zwei gegenüberliegenden Seiten krallenartige Vorsprünge ausgebildet, mit welchen ein Drahtabschnitt des Zaunelementes übergriffen werden kann.
Das Kunststoffplattenteil selbst ist zur Befestigung des Zaunelementes an dem Pfosten mittels eines Befestigungsmittels zu befestigen.
Aus der FR 2 884 543 A1 sind Draht-Zaunelemente bekannt, die mittels plattenartiger Befestigungsteile miteinander befestigbar sind.

Die Erfindung beschäftigt sich mit der Aufgabenstellung, einen Kunststoffstreifen der genannten Art sowie einen Zaun der genannten Art in vorteilhafter Weise auszugestalten.

### Zusammenfassung der Erfindung

Diese Aufgabe ist zunächst beim Gegenstand des Anspruches 1 gelöst, wobei darauf abgestellt ist, dass an den Langseiten in regelmäßigen Abständen wiederholt gegenüberliegende und bzgl. ihrer quer zu einer Langseite verlaufenden Längsrichtungen aneinander ausgerichtete randoffene Langlöcher ausgebildet sind, die an ihren aufeinander zu gerichteten Enden geschlossen sind, so dass eine öffnungsfreie ebenfalls rechteckig gebildete Mittelfläche verbleibt und dass der Kunststoffstreifen (1) in einem Querschnitt, der in Richtung eines Langloches (11) verläuft, im Wesentlichen V-förmig gestaltet ist.

Hinsichtlich eines unter Ausbildung von Maschen gebildeten Zauns ist die Aufgabe beim Gegenstand des Anspruches 11 gelöst, wobei darauf abgestellt ist, dass der durch den gekrümmten Verlauf gebildete Teil des Zauns eine Abdeckung durch einen Kunststoffstreifen mit den Merkmalen des Anspruches 1 aufweist, der im Querschnitt angepasst an die Krümmung verläuft und unter Eingriff in Maschenöffnungen des Zauns an diesem steckgehaltert ist.

Der Kunststoffstreifen ist so ausgebildet, dass dieser bspw. in einem gekrümmt verlaufenden Bereich eines unter Ausbildung von Maschen gebildeten Zauns steckhalterbar ist. Durch die Ausbildung von randoffenen Langlöchern ergeben sich an den Langseiten des Kunststoffstreifens fahnenartige Streifenabschnitte, die geeignet sind zum Hintergreifen von im Wesentlichen horizontal oder im Wesentlichen vertikal verlaufenden drahtartigen Elementen des Zaunes.

In der Anordnungsstellung an dem Zaun können die durch die Langlöcher ausgebildeten fahnenartigen Abschnitte des Kunststoffstreifens unter federnder Belastung, bevorzugt resultierend aus der gegebenen Elastizität des Kunststoffstreifens, an dem drahtartigen Element des Zaunes anliegen. Es kann hierdurch eine Klemmhalterung erzielt werden.

Durch die öffnungsfreie, bevorzugt ebenfalls rechteckig gebildete Mittelfläche des Kunststoffstreifens, sowie - im Einbauzustand - durch die fahnenartigen Abschnitte des Kunststoffstreifens in Verbindung mit den, die Langlöcher durchsetzenden drahtartigen Elemente des Zaunes ergibt sich eine insgesamt zumindest annähernd geschlossene Fläche. Ein solch gestalteter und angeordneter Kunststoffstreifen kann als Sichtschutz und/oder Werbeträger oder dergleichen dienen.

Der Kunststoffstreifen kann derart anordbar sein, dass dieser bspw. zunächst im Bereich einer seiner Langseiten unter Durchstecken der fahnenartig ausgebildeten Streifenabschnitte durch die Maschen des Zaunes angesetzt wird. Unter elastischer Verformung des Kunststoffstreifens werden die fahnenartigen Streifenabschnitte der gegenüberliegenden Langseite durch die diesen zugeordneten Maschen geführt.

Der die öffnungsfreie, bevorzugt rechteckig gebildete Mittelfläche aufweisende Streifenbereich kann, wie auch bevorzugt, im Querschnitt dem Krümmungsverlauf der drahtartigen Elemente folgen.

Zufolge der Klemm-/Steckhalterung ist der die Mittelfläche bildende Streifenabschnitt bevorzugt in Richtung auf die drahtartigen Elemente des Zauns federbelastet, so dass dieser in einer bevorzugten Ausgestaltung an den drahtartigen Elementen zumindest teilweise zur Anlage kommt.

Die Breite der Mittelfläche kann in Richtung einer Schmalseite des Kunststoffstreifens 2/10 bis 8/10, bevorzugt 4/10 bis 6/10 der Länge der Schmalseite entsprechen.

Auch kann eine Öffnungsbreite eines Langloches 3mm bis 8mm betragen. Die Öffnungsbreite ist jedenfalls gleich oder, wie bevorzugt, größer als ein Durchmessermaß eines drahtartigen Elements. Bevorzugt wird eine Öffnungsbreite von etwa 5mm.

Alle Langlöcher können in einer Richtung der Längsseite mit demselben Abstand zueinander angeordnet sein. Der Abstand ist bevorzugt angepasst an den Abstand drahtartiger Elemente eines Zaunes. So kann weiter der Abstand zwischen den Langlöchern 10mm bis 200mm betragen, weiter bevorzugt etwa 50mm bis 60mm.

Die Länge eines Langloches in Richtung einer Schmalseite des Kunststoffstreifens kann 1/10 bis 4/10 der Länge einer Schmalseite des Kunststoffstreifens entsprechen. In einer bevorzugten Ausgestaltung entspricht die Länge eines Langloches etwa 2/10 der Schmalseitenlänge.

Zudem kann die Dicke des Kunststoffstreifens 0,2mm bis 4mm betragen. In einer bevorzugten Ausgestaltung ist eine Dicke von etwa 1mm, weiter bevorzugt etwa 0,9mm vorgesehen. Bevorzugt ist eine Ausgestaltung, bei welcher der Kunststoffstreifen durchgehend flächig mit derselben Dicke ausgebildet ist. Der Kunststoffstreifen kann aus PVC bestehen. In einem Querschnitt, der in Richtung eines Langloches verläuft, ist der Kunststoffstreifen im Wesentlichen V-förmig gestaltet.

Zudem kann der Kunststoffstreifen in einem Querschnitt, der in Richtung eines Langloches verläuft, im Wesentlichen V-förmig gestaltet sein. Die V-Schenkel können hierbei mit Bezug auf den Querschnitt einen Winkel vom 45° bis hin zu 135° einschließen, in bevorzugter Ausgestaltung einen Winkel von etwa 90°.

Auch kann ein V-Schenkel an seinem freien Ende eine nach außen gerichtete Abflachung aufweisen. Bevorzugt weisen beide V-Schenkel eine solche Abflachung auf, welche beiden Abflachungen im Wesentlichen die durch die Ausbildung von Langlöchern fahnenartig gebildeten Teile des Kunststoffstreifens bilden.

Die nach außen gerichteten Abflachungen erstrecken sich in bevorzugter Ausgestaltung in einer gemeinsamen Ebene. Diese Ebene kann, wie auch bevorzugt, die Projektionsebene sein, in welcher sich der Kunststoffstreifen insgesamt mit seiner rechteckigen Grundfläche darstellt.

Die Langlöcher können sich, ausgehend von der jeweiligen Langseite des Kunststoffstreifens bis in einen Übergangsbereich der Abflachung in den zugehörigen V-Schenkel erstrecken. Ein solcher Übergangsbereich kann im Querschnitt des Kunststoffstreifens kreisbogenabschnittartig gebildet sein.

Auch können die V-Schenkel in ihrem Verbindungsbereich eine zum V-Innern gerichtete Auswölbung aufweisen. Es kann sich hierbei um eine im Querschnitt kreisabschnittförmige Auswölbung handeln, welche sich, wie weiter bevorzugt, über die gesamte Länge des Kunststoffstreifens erstrecken kann. Mit Bezug auf den Querschnitt können sich beidseitig der Auswölbung sickenartige Bereiche anschließen, welche in die V-Schenkel einlaufen. Weiter können sich hieraus Biegezonen ergeben, die eine elastische Verformung der anschließenden V-Schenkel und der hieran anschließenden Abflachungen begünstigen.

Die Auswölbung kann hinsichtlich ihres Querschnittes - bei kreisabschnittförmiger Ausbildung der Auswölbung hinsichtlich des Radius - angepasst sein an den Durchmesser eines drahtartigen Elementes eines Zaunes.

Hinsichtlich des unter Ausbildung von Maschen gebildeten Zaunes kann weiter vorgesehen sein, dass der den gekrümmten Verlauf aufweisende Teil des Zaunes eine konkave und eine konvexe Seite bildet. In diesem Zusammenhang kann die Abdeckung gesehen von der konkaven Seite in ihrem Längs-Mittelbereich drahtartige Elemente des Zaunes überdecken.

Die vor- und nachstehend angegebenen Bereiche bzw. Wertebereiche oder Mehrfachbereiche schließen hinsichtlich der Offenbarung auch sämtliche Zwischenwerte ein, insbesondere in 1/10-Schritten der jeweiligen Dimension, ggf. also auch dimensionslos. Beispielsweise beinhaltet die Angabe 3mm bis 8mm auch die Offenbarung von 3,1mm bis 8mm, 3mm bis 7,9mm, 3,1mm bis 7,9mm, 4,2mm bis 5,8mm, etc., die Offenbarung von 10mm bis 200mm auch, die Offenbarung von 10,1mm bis 200mm, 10mm bis 199,9mm, 10,1mm bis 199,9mm, 43,4mm bis 115,8mm, etc., die Offenbarung von 1/10 bis 4/10, auch die Offenbarung von 11/100 bis 40/100, 10/100 bis 39/100, 11/100 bis 39/100 etc., die Offenbarung von 0,2mm bis 4mm, auch die Offenbarung von 0,3mm bis 4mm, 0,2mm bis 3,9mm, 0,3mm bis 3,9mm etc. Diese Offenbarung kann einerseits zur Eingrenzung einer genannten Bereichsgrenze von unten und/oder oben, alternativ oder ergänzend aber zur Offenbarung eines oder mehrerer singulärer Werte aus einem jeweiligen angegebenen Bereich dienen.

### Kurze Beschreibung der Zeichnungen

Nachstehend ist die Erfindung anhand der beigefügten Zeichnung erläutert, die aber lediglich ein Ausführungsbeispiel darstellt. Auf der Zeichnung zeigt:
- Figur 1:: einen Zaun der in Rede stehenden Art in perspektivischer Darstellung;
- Figur 2:: eine perspektivische Detaildarstellung eines gekrümmt verlaufenden Bereichs des Zaunes;
- Figur 3:: eine der Fig. 2 entsprechende Darstellung bei Anordnung eines Kunststoffstreifens;
- Figur 4:: den Kunststoffstreifen in perspektivischer Darstellung;
- Figur 5:: den Schnitt gemäß der Linie V-V in Fig. 4;
- Figur 6:: die Draufsicht auf den Kunststoffstreifen;
- Figur 7:: die Herausvergrößerung des Bereichs VII in Fig. 5;
- Figur 8:: eine perspektivische Detaildarstellung bei Anordnung des Kunststoffstreifens an einem horizontal verlaufenden Krümmungsbereich des Zaunes;
- Figur 9:: eine der Fig. 8 im Wesentlichen entsprechende Darstellung, jedoch bei vertikal verlaufendem Krümmungsbereich;
- Figur 10:: eine der Fig. 7 entsprechende Darstellung, eine alternative Ausführungsform betreffend.

### Beschreibung der Ausführungsformen

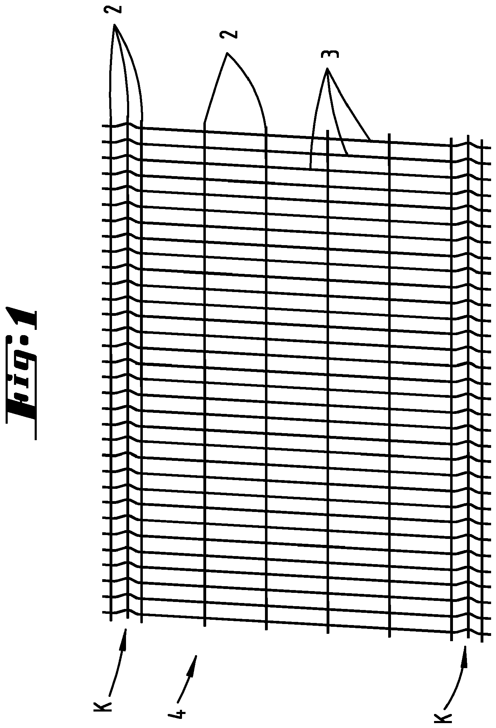

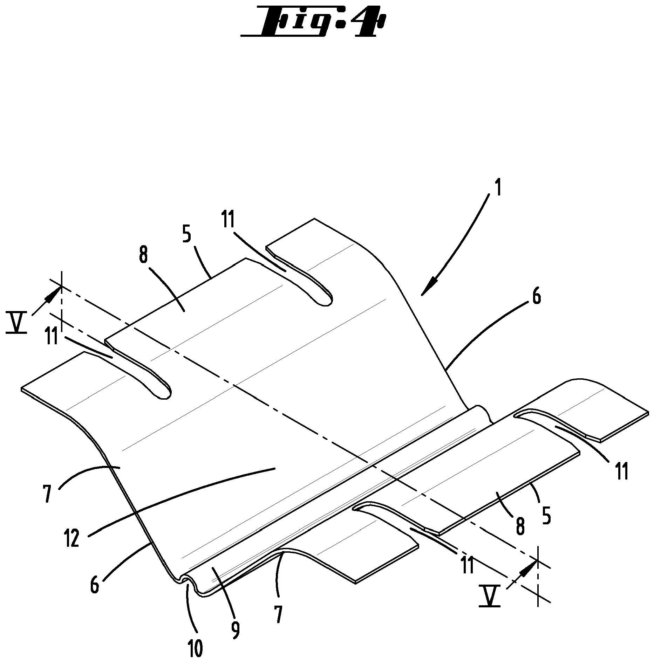

Dargestellt und beschrieben ist ein wie beispielhaft in Figur 4 dargestellter Kunststoffstreifen 1. Dieser ist insbesondere anordbar an einem aus drahtartigen Elementen 2 und 3 gebildeten Zaun 4. Ein solcher Zaun ist beispielhaft in Figur 1 dargestellt.

Die drahtförmigen Elemente 2 und 3 sind zur Ausbildung von Maschen horizontal (Element 2) und vertikal (Element 3) angeordnet und miteinander verbunden, insbesondere schweißverbunden. Die horizontalen Elemente 2 sind bevorzugt alle auf derselben Seite an den vertikalen Elementen 3 befestigt.

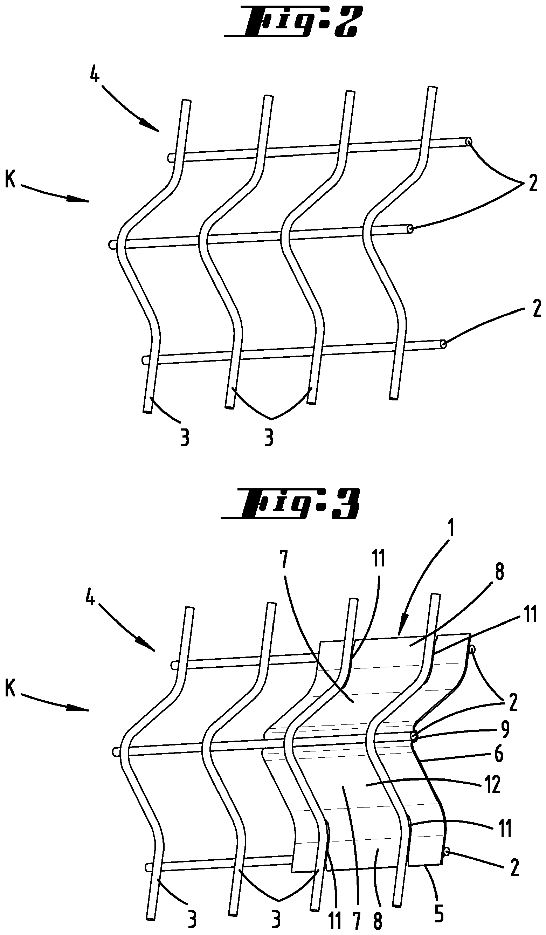

In einer Ausführungsform sind die vertikal ausgerichteten Elemente 3 mit Bezug auf einen Querschnitt quer zur Längserstreckung des Zaunes 4 über einen Teil ihrer Erstreckung gekrümmt verlaufend ausgebildet. Es ergibt sich so ein durch den gekrümmten Verlauf der vertikal ausgerichteten Elemente 3 gebildeter Teil des Zaunes 4, der im Wesentlichen horizontal ausgerichtet ist (vgl. Fig. 2).

Die Krümmung K ergibt sich insbesondere zufolge Ausbildung zweier V-förmiger, im Querschnitt eine V-Öffnung zueinander bildender Abschnitte des Elementes 3, an welchen V-förmigen Abschnitten sich langgestreckte und vertikal ausgerichtete Abschnitte des Elementes 3 anschließen.

Im Bereich der V-Spitze des gekrümmten Bereiches sind die Elemente 3 über ein langgestreckt horizontal verlaufendes Element 2 verbunden.

Weitere horizontal verlaufende Elemente 2 verbinden die vertikal verlaufenden Elemente 3 im Bereich ihrer langgestreckt und vertikal ausgerichteten Abschnitte, so weitere insbesondere auch nahe einem Übergangsbereich von Vertikalabschnitt in einen V-Abschnitt im Krümmungsbereich. Bevorzugt sind solche horizontal verlaufende Elemente 2 mit einem Abstand zum Übergang von vertikalen Abschnitt zu dem V-Abschnitt des Elementes 3 angeordnet, welcher Abstand etwa dem 5- bis 10-fachen der Drahtstärke der Elemente 2 und 3 entspricht.

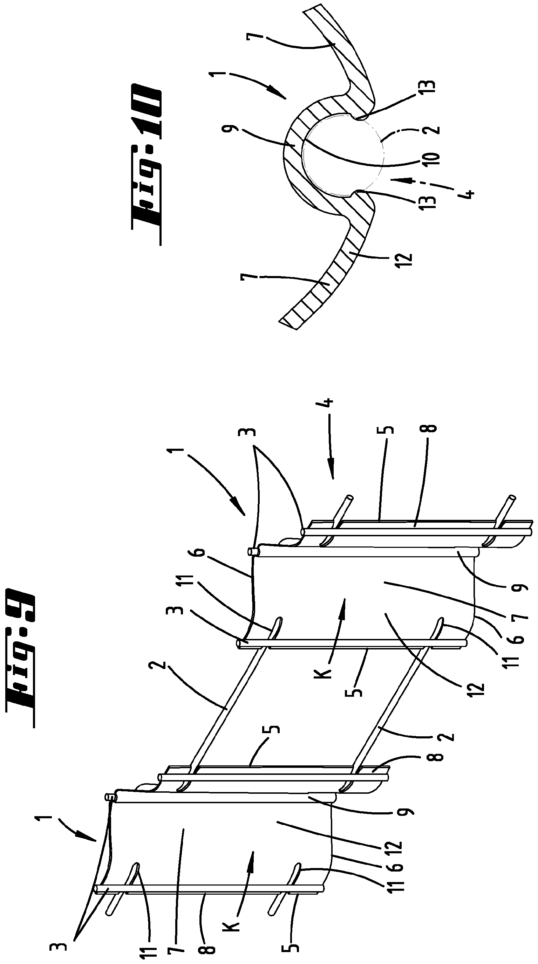

Wie sich beispielhaft aus der Darstellung in Figur 9 ergibt, kann die Krümmung K des Zaunes 4 auch insgesamt vertikal verlaufen, dies bei entsprechend bereichsweiser gekrümmter Ausgestaltung der horizontal ausgerichteten Elemente 2.

Der Kunststoffstreifen 1 ist bspw. ein PVC-Streifen mit einer bevorzugt durchgehenden gleichmäßigen Dicke von bspw. 0,9mm.

Der Kunststoffstreifen 1 ist mit Bezug auf eine Projektion in eine Ebene, in welcher sich die Randkanten als Linien darstellen, im Wesentlichen eine rechteckige Grundfläche aufweisend ausgebildet. So weist der Kunststoffstreifen 1 zwei Langseiten 5 und zwei quer hierzu ausgerichtete Schmalseiten 6 aus.

In den Darstellungen ist der Kunststoffstreifen 1 nur ausschnittweise gezeigt. Der Kunststoffstreifen 1 weist Langseiten 5 auf, deren Länge einem Mehrfachen, bspw. einem 5-, 10- oder 20-Fachen, der Länge einer Schmalseite 6 entspricht.

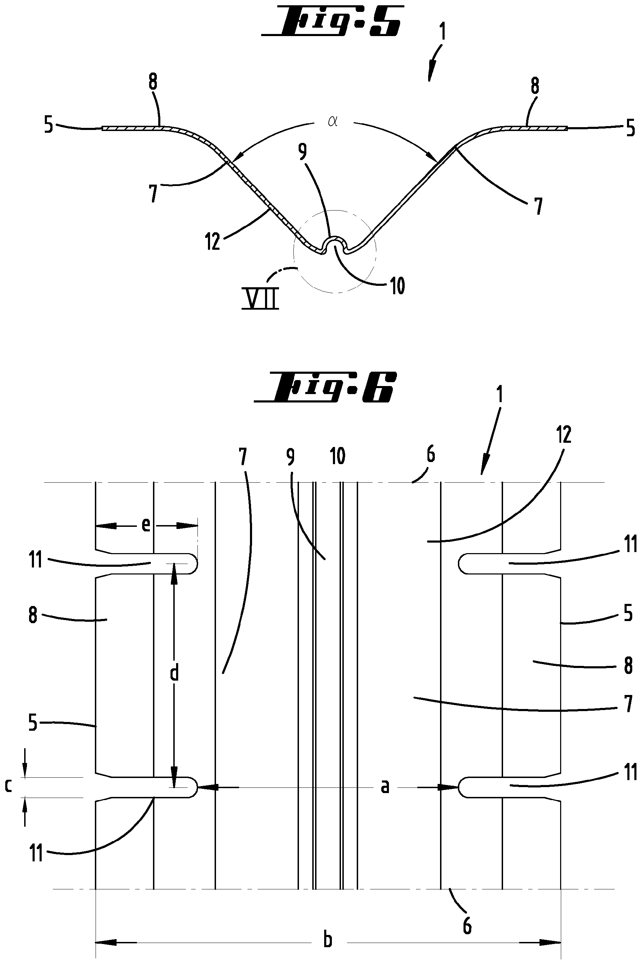

Mit Bezug auf einen senkrecht zu dieser Projektionsebene ausgerichteten Querschnitt gemäß der Darstellung in Figur 5 ist der Kunststoffstreifen 1 im Wesentlichen V-förmig gestaltet, mit zwei V-Schenkeln 7, die in diesem Querschnitt zueinander einen Winkel α von bspw. 60° bis 120°, weiter etwa 90° einschließen können.

Jeder V-Schenkel 7 geht im Bereich seines freien Endes in eine nach außen gerichtete Abflachung 8 über. Die Abflachungen 8 beider V-Schenkel 7 erstrecken sich bevorzugt in einer gemeinsamen Ebene. Der Übergangsbereich ist bevorzugt verrundet.

In dem senkrecht zur Abflachungsebene beabstandeten Verbindungsbereich der V-Schenkel 7 weist dieser eine zu dem V-Inneren des Kunststoffstreifens 1 gerichtete Auswölbung 9 auf.

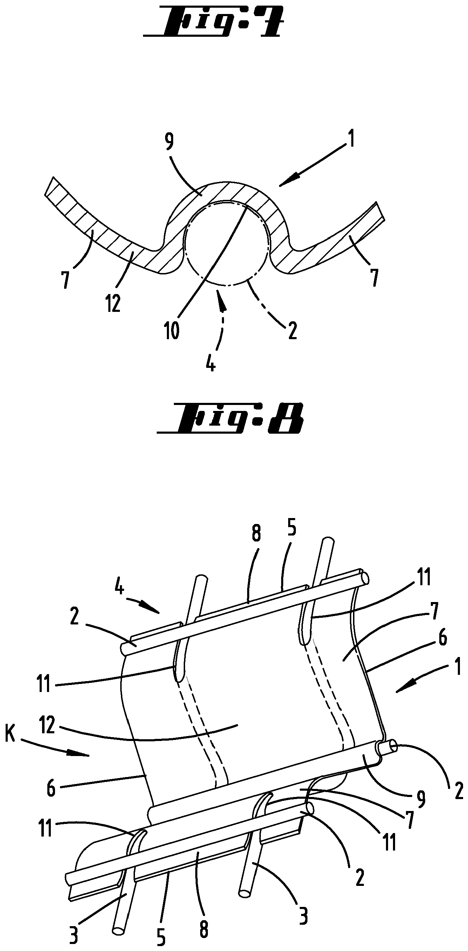

Die Auswölbung 9 kann, wie bspw. in Figur 7 dargestellt, im Querschnitt kreisabschnittförmig, insbesondere halbkreisförmig ausgebildet sein. Hieraus ergibt sich eine zum V-Äußeren hin gerichtete, in Längserstreckung des Kunststoffstreifens 1 verlaufende, rinnenartige Nut 10, die querschnittsmäßig bevorzugt angepasst ist an die Querschnittskontur eines drahtförmigen Elementes 2, 3.

Beidseitig der Auswölbung 9 ergeben sich im V-inneren Übergangsbereich zu den V-Schenkeln 7 sickenartige Bereiche.

Insgesamt sind auch durch die vorbeschriebene Ausbildung des Verbindungsbereiches, aber auch schon allein zufolge der elastischen Ausgestaltung des Streifenmaterials die V-Schenkel 7 entgegen einer gegebenen Rückstellkraft insbesondere in Richtung auf das V-Innere hin ausschwenkbar.

An den Langseiten 5 sind in regelmäßigen Abständen wiederholt gegenüberliegende und bzgl. ihrer quer zu einer Langseite 5 verlaufenden Längsrichtungen aneinander ausgerichtete Langlöcher 11 ausgebildet. Diese sind zu den Langseiten 5 hin randoffen.

Die Langlöcher 11 erstrecken sich ausgehend von den Langseiten 5 über die quer zur Längserstreckung betrachtete Erstreckung der Abflachungen 8 bis hin zu dem Übergangsbereich zwischen Abflachung 8 und zugehörigem V-Schenkel 7.

Die Langlöcher 11 enden mit Abstand zu dem mittigen Verbindungsbereich der V-Schenkel 7, so dass sich eine öffnungsfreie, in der Vertikalprojektion ebenfalls rechteckig gebildete, geschlossene Mittelfläche 12 ergibt.

In Richtung einer Schmalseite 6 betrachtet weist die Mittelfläche 12 eine Breite a auf, die in dem dargestellten Ausführungsbeispiel etwa dem 0,5- bis 0,6-Fachen der Länge b der Schmalseite 6 entspricht.

Die ebenfalls in Richtung einer Schmalseite 6 betrachtete Länge e eines Langloches 11 entspricht etwa dem 0,2- bis 0,3-Fachen der Schmalseitenlänge b. Die quer hierzu betrachtete Öffnungsbreite c eines jeden Langloches 11 kann 1/3 bis 1/10, bspw. 1/5 der Langlochlänge e entsprechen, so weiter bspw. 5mm.

In einer bevorzugten Ausgestaltung sind alle Langlöcher 11 des Kunststoffstreifens 1 mit gleicher Länge e und gleicher Öffnungsbreite c versehen.

Auch können, wie bevorzugt, die Langlöcher 11 in Längserstreckung des Kunststoffstreifens 1 betrachtet gleiche Abstände d zueinander aufweisen. Dieser Abstand d ist angepasst an den Abstand der vertikal ausgerichteten Elemente 3 des Zaunes 4 zueinander bei einem insgesamt horizontal verlaufenden Krümmungsbereich, bzw. angepasst an den Abstand der horizontalen Elemente 2 eines Zaunes 4 zueinander bei insgesamt vertikal ausgerichtetem Krümmungsbereich. So ist in einer Ausgestaltung ein Abstand d von etwa 50mm bis 60mm, weiter bevorzugt 55mm vorgesehen.

Der gekrümmte Bereich des Zaunes 4 weist eine konvexe Seite und eine konkave Seite auf, wobei die nicht gekrümmt verlaufenden Elemente, so insbesondere die horizontalen Elemente 2 bei einem horizontalen Krümmungsbereich, konkavseitig der partiell gekrümmt verlaufenden Elemente angeordnet und mit diesen befestigt sind.

Der Kunststoffstreifen 1 ist in der Nutzungsstellung bevorzugt der konkaven Seite des gekrümmten Zaunbereiches zugeordnet angeordnet und überdeckt hierbei mit der Mitteilfläche 12 insbesondere das im Bereich der V-Spitze des gekrümmt verlaufenden Elements angeordnete Querelement sowie Bereiche des gekrümmt verlaufenden Elements im Bereich dessen V-Schenkel.

Die fahnenartig freigeschnittenen Bereiche des Kunststoffstreifens 1 im Bereich der Abflachungen 8 durchgreifen die sich beidseitig des im Bereich der V-Spitze angeordneten drahtförmigen Element ergebenden Maschen und liegen hintergreifend an den die Maschen begrenzenden weiteren, parallel zu den die V-Spitzen verbindenden Element verlaufenden Elementen an.

Bei einer horizontalen Ausrichtung des Krümmungsabschnittes des Zaunes 4 sind die Maschen in Längserstreckung des Zaunes 4 seitlich begrenzt durch die vertikal verlaufenden Elemente 3, die im Krümmungsbereich V-förmig zueinander verlaufende Abschnitte aufweisen. Die durchgehend langgestreckt verlaufenden, horizontal ausgerichteten Elemente 2 begrenzen die Maschen ober- und unterseitig.

Der mit den Langlöchern 11 versehene, bevorzugt ausgestanzte Kunststoffstreifen 1 kann in einer Ausführung zur Anordnung an den Zaun 4 zunächst in die vertikal unteren Maschen eingestellt werden. Die fahnenartigen Abschnitte der Abflachung 8 erstrecken sich hierbei zugewandt der konvexen Seite des Krümmungsabschnittes, entsprechend das horizontale Element 2 von der konvexen Seite her gesehen überdeckend. Abschnitte der vertikalen Elemente 3 greifen durch die Langlöcher 11.

Unter Nutzung der gegebenen Elastizität werden die fahnenartigen Abschnitte des Kunststoffstreifens 1 im Bereich der hierbei nach oben weisenden Abflachung 8 hinter das obere horizontal ausgerichtete Element 2 geführt.

Zur Folge der elastischen Rückstellfähigkeit des Kunststoffstreifens 1 ist dieser in dieser Stellung an dem Zaun 4 klemmgehaltert. Unterstützt wird diese Stellung durch Eingreifen des die V-Spitzen verbindenden drahtförmigen Elements 2 in die streifenseitige Nut 10.

Auch kann die Auswölbung 9 im Bereich der zum V-Äußeren hin gewandten Nut 10 zur Clipshalterung an dem aufzunehmenden Element 2 bzw. 3 ausgebildet sein. Die Kontur der Nut 10 erstreckt sich hierbei in einem Querschnitt über 180° hinaus, zur Ausbildung von Hintergreifabschnitten 13 (vgl. Fig. 10). Diese dienen zum entsprechenden Hintergreifen des drahtartigen Elementes 2 in der Nutzungsstellung. Durch die elastische Ausgestaltung des Kunststoffmaterials kann im Zuge der Montage ein Erweitern des Öffnungsquerschnittes und somit ein Überlaufen der Hintergreifabschnitte 13 erreicht werden. So kann weiter die Anordnung des Kunststoffstreifens 1 an dem Zaun 4 so erreicht werden, dass zunächst eine clipsartige Befestigung des Kunststoffstreifens 1 im Bereich der Nut 10 in Zusammenwirkung mit den die V-Spitzen des Zaunes 4 verbindenden Elements 2, 3 vorgenommen wird. Aus dieser Stellung heraus können die V-Schenkel 7 um die Verbindungsstelle an der Auswölbung 9, insbesondere um eine in diesem Bereich vorgesehene, bspw. materialverjüngte Stelle, zum Einfädeln in die Zaunmaschen verschwenkt werden.

### Liste der Bezugszeichen

- 1: Kunststoffstreifen
- 2: Element
- 3: Element
- 4: Zaun
- 5: Langseite
- 6: Schmalseite
- 7: V-Schenkel
- 8: Abflachung
- 9: Auswölbung
- 10: Nut
- 11: Langloch
- 12: Mittelfläche
- 13: Hintergreifabschnitt
- a: Breite
- b: Länge
- c: Öffnungsbreite
- d: Abstand
- e: Länge
- K: Krümmung
- α: Winkel

## Patentansprüche

1. Langgestreckter, im Wesentlichen mit einer sich in einer Vertikalprojektion abbildenden rechteckigen Grundfläche ausgebildeter Kunststoffstreifen (1) für einen unter Ausbildung von Maschen gebildeten Zaun, der Kunststoffstreifen (1) umfassend zwei Langseiten (5) und zwei Schmalseiten (6), wobei der Kunststoffstreifen (1) elastisch verformbar ist, wobei an den Langseiten (5) in regelmäßigen Abständen (d) wiederholt gegenüberliegende und bzgl. ihrer quer zu einer Langseite verlaufenden Längsrichtungen aneinander ausgerichtete, randoffene Langlöcher (11) ausgebildet sind, die an ihren aufeinander zu gerichteten Enden geschlossen sind, so dass eine öffnungsfreie, ebenfalls rechteckig gebildete Mittelfläche (12) verbleibt, **dadurch gekennzeichnet, dass** der Kunststoffstreifen (1) in einem Querschnitt, der in Richtung eines Langloches (11) verläuft, im Wesentlichen V-förmig gestaltet ist.

2. Kunststoffstreifen nach Anspruch 1, **dadurch gekennzeichnet, dass** ein V-Schenkel (7) an seinem freien Ende eine nach außen gerichtete Abflachung (8) aufweist.

3. Kunststoffstreifen nach einem der vorhergehenden Ansprüche, **dadurch gekennzeichnet, dass** die V-Schenkel (7) in ihrem Verbindungsbereich eine zum V-Innern gerichtete Auswölbung (9) aufweisen.

4. Kunststoffstreifen nach einem der vorhergehenden Ansprüche, **dadurch gekennzeichnet, dass** die Breite (a) der Mittelfläche (12) in Richtung einer Schmalseite (6) des Kunststoffstreifens (1) 1/10 bis 8/10 der Länge (b) der Schmalseite entspricht.

5. Kunststoffstreifen nach einem der vorhergehenden Ansprüche, **dadurch gekennzeichnet, dass** eine Öffnungsbreite (c) eines Langloches (11) 3mm bis 8mm beträgt.

6. Kunststoffstreifen nach einem der vorhergehenden Ansprüche, **dadurch gekennzeichnet, dass** alle Langlöcher (11) in einer Richtung der Langseite (5) mit demselben Abstand (d) zueinander angeordnet sind.

7. Kunststoffstreifen nach einem der vorhergehenden Ansprüche, **dadurch gekennzeichnet, dass** der Abstand (d) zwischen den Langlöchern (11) 10mm bis 200mm beträgt.

8. Kunststoffstreifen nach einem der vorhergehenden Ansprüche, **dadurch gekennzeichnet, dass** die Länge (e) eines Langloches (11) 1/10 bis 4/10 der Länge (b) einer Schmalseite (6) des Kunststoffstreifens (1) entspricht.

9. Kunststoffstreifen nach einem der vorhergehenden Ansprüche, **dadurch gekennzeichnet, dass** die Dicke des Kunststoffstreifens (1) 0,2mm bis 4mm beträgt.

10. Kunststoffstreifen nach einem der vorhergehenden Ansprüche, **dadurch gekennzeichnet, dass** der Kunststoffstreifen (1) durchgehend flächig mit derselben Dicke ausgebildet ist.

11. Unter Ausbildung von Maschen gebildeter Zaun (4) aus drahtartigen Elementen (2, 3), wobei die drahtartigen Elemente (2, 3) bezogen auf einen aufgebauten Zustand des Zauns (4) im Wesentlichen horizontal und im Wesentlichen vertikal verlaufend angeordnet sind und die im Wesentlichen vertikal oder die im Wesentlichen horizontal verlaufenden Elemente (2, 3) in einem Querschnitt über einen Teil ihrer Erstreckung gekrümmt verlaufen, **dadurch gekennzeichnet, dass** der durch den gekrümmten Verlauf gebildete Teil des Zauns (4) eine Abdeckung durch einen Kunststoffstreifen (1) mit den Merkmalen des Anspruches 1 aufweist, der im Querschnitt angepasst an die Krümmung verläuft und unter Eingriff in Maschenöffnungen des Zauns (4) an diesem steckgehaltert ist.

12. Zaun nach Anspruch 11, **dadurch gekennzeichnet, dass** der den gekrümmten Verlauf aufweisende Teil des Zaunes (4) eine konkave und eine konvexe Seite bildet.

13. Zaun nach einem der Ansprüche 11 oder 12, **dadurch gekennzeichnet, dass** die Abdeckung gesehen von der konkaven Seite in ihrem Längs-Mittelbereich drahtartige Elemente (2, 3) überdeckt.

## Claims

1. Elongate plastics strip (1), substantially comprising a rectangular base which is formed in a vertical projection, for a fence formed by creating meshes, the plastics strip (1) comprising two long sides (5) and two narrow sides (6), the plastics strip (1) being elastically deformable, open-edged slots (11) that oppose one another at intervals and at regular spacings (d) and that are mutually aligned relative to the longitudinal directions thereof that extend transversely to a long side being formed on the long sides (5), the mutually facing ends of said slots being closed such that a likewise rectangular central surface (12) without openings remains, **characterised in that** the plastics strip (1) is substantially V-shaped in a cross section which extends towards a slot (11).

2. Plastics strip according to claim 1, **characterised in that** a V-leg (7) comprises an outwardly oriented flattened portion (8) at the free end thereof.

3. Plastics strip according to either of the preceding claims, **characterised in that** the V-legs (7) comprise a bulge (9), oriented towards the inside of the V, in the connection region thereof.

4. Plastics strip according to any of the preceding claims, **characterised in that** the width (a) of the central surface (12) in the direction of a narrow side (6) of the plastics strip (1) corresponds to from 1/10 to 8/10 of the length (b) of the narrow side.

5. Plastics strip according to any of the preceding claims, **characterised in that** an opening width (c) of a slot (11) is from 3 mm to 8 mm.

6. Plastics strip according to any of the preceding claims, **characterised in that** all the slots (11) are arranged having the same mutual spacing (d) in a direction of the long side (5).

7. Plastics strip according to any of the preceding claims, **characterised in that** the spacing (d) between the slots (11) is from 10 mm to 200 mm.

8. Plastics strip according to any of the preceding claims, **characterised in that** the length (e) of a slot (11) corresponds to from 1/10 to 4/10 of the length (b) of a narrow side (6) of the plastics strip (1).

9. Plastics strip according to any of the preceding claims, **characterised in that** the thickness of the plastics strip (1) is from 0.2 mm to 4 mm.

10. Plastics strip according to any of the preceding claims, **characterised in that** the plastics strip (1) is continuously planar and of the same thickness.

11. Fence (4) formed by creating meshes and made of wire-like elements (2, 3), the wire-like elements (2, 3) extending substantially horizontally and substantially vertically relative to an erected state of the fence (4), and the substantially vertically or the substantially horizontally extending elements (2, 3) extending in a curved manner in a cross section over a portion of the extension thereof, **characterised in that** the portion of the fence (4) formed by the curved course comprises a covering in the form of a plastics strip (1) having the features of claim 1 and extending in a manner matched to the curvature in cross section and being held on the fence (4) by engaging in the mesh openings thereof.

12. Fence according to claim 11, **characterised in that** the portion of the fence (4) having the curved course forms one concave and one convex side.

13. Fence according to either claim 11 or claim 12, **characterised in that** the longitudinal central region of the covering covers the wire-like elements (2, 3) when viewed from the concave side.

## Revendications

1. Bande de matière plastique allongée (1) formée sensiblement avec une surface de base se représentant de manière rectangulaire dans une projection verticale, pour une clôture réalisée par la formation de mailles, la bande de matière plastique (1) comprenant deux côtés longs (5) et deux côtés étroits (6), dans laquelle la bande de matière plastique (1) est déformable élastiquement, dans laquelle sont formées de manière répétée à des distances régulières (d) sur les côtés longs (5) des ouvertures oblongues (11) à bord ouvert qui sont opposées et alignées relativement à leurs directions longitudinales s'étendant perpendiculairement à un côté long et qui sont fermées au niveau de leurs extrémités dirigées les unes vers les autres de manière à ce que subsiste une surface médiane (12) dépourvue d'ouverture et de forme également rectangulaire, **caractérisée en ce que**, dans une section transversale qui s'étend dans la direction d'une ouverture oblongue (11), la bande de matière plastique (1) est réalisée sensiblement en forme de V.

2. Bande de matière plastique selon la revendication 1, **caractérisée en ce qu'**une branche de V (7) présente à son extrémité libre un aplatissement (8) dirigé vers l'extérieur.

3. Bande de matière plastique selon l'une des revendications précédentes, **caractérisée en ce que** les branches de V (7) présentent dans leur zone de liaison un bombement (9) dirigé vers l'intérieur du V.

4. Bande de matière plastique selon l'une des revendications précédentes, **caractérisée en ce que** la largeur (a) de la surface médiane (12), dans la direction d'un côté étroit (6) de la bande de matière plastique (1), représente 1/10 à 8/10 de la longueur (b) du côté étroit.

5. Bande de matière plastique selon l'une des revendications précédentes, **caractérisée en ce qu'**une largeur d'ouverture (c) d'une ouverture oblongue (11) est de 3 mm à 8 mm.

6. Bande de matière plastique selon l'une des revendications précédentes, **caractérisée en ce que** toutes les ouvertures oblongues (11) sont agencées dans une direction du côté long (5) avec le même écartement (d) les unes par rapport aux autres.

7. Bande de matière plastique selon l'une des revendications précédentes, **caractérisée en ce que** l'écartement (d) entre les ouvertures oblongues (11) est de 10 mm à 200 mm.

8. Bande de matière plastique selon l'une des revendications précédentes, **caractérisée en ce que** la longueur (e) d'une ouverture oblongue (11) représente 1/10 à 4/10 de la longueur (b) d'un côté étroit (6) de la bande de matière plastique (1).

9. Bande de matière plastique selon l'une des revendications précédentes, **caractérisée en ce que** l'épaisseur de la bande de plastique (1) est de 0,2 mm à 4 mm.

10. Bande de matière plastique selon l'une des revendications précédentes, **caractérisée en ce que** la bande de matière plastique (1) est réalisée sous la forme d'une surface continue avec la même épaisseur.

11. Clôture (4) formée par la réalisation de mailles à partir d'éléments en forme de fil (2, 3), dans laquelle, en référence à un état monté de la clôture (4), les éléments en forme de fil (2, 3) sont agencés s'étendant sensiblement horizontalement et sensiblement verticalement, et les éléments s'étendant sensiblement verticalement ou sensiblement horizontalement (2, 3) s'étendent, en section transversale, de manière incurvée sur une partie de leur extension, **caractérisée en ce que** la partie de la clôture (4) formée par le profil incurvé présente un recouvrement par une bande en matière plastique (1) possédant les caractéristiques de la revendication 1, laquelle s'étend en section transversale de manière ajustée à l'incurvation, et est maintenu par enfichage à la clôture (4) en venant s'engager dans des ouvertures de mailles de celle-ci.

12. Clôture selon la revendication 11, **caractérisée en ce que** la partie de la clôture (4) présentant le profil incurvé forme un côté concave et un côté convexe.

13. Clôture selon l'une des revendications 11 ou 12, **caractérisée en ce que** le recouvrement, vu depuis le côté concave, recouvre dans sa zone médiane longitudinale des éléments en forme de fil (2, 3).
